# FASCICULE DE BREVET EUROPEEN

(11) **EP 0 359 646 B1**
(45) Date de publication et mention de la délivrance du brevet: **15.12.1993**
(21) Numéro de dépôt: 89402470.2
(22) Date de dépôt: 11.09.1989
(51) Int. Cl.: G01K 13/00, G01K 7/22

(54) **Paroi détectrice d'un point chaud et procédé d'obtention**
Wand zum Detektieren einer warmen Stelle und Verfahren zu deren Herstellung
Hot-spot detecting wall and method for obtaining it

(30) Priorité: 13.09.1988 FR 8811916
(43) Date de publication de la demande: 21.03.1990
(73) Titulaire: COMMISSARIAT A L'ENERGIE ATOMIQUE, 75015 Paris Cédex 15 (FR)
(72) Inventeur: Baumont, Geneviève, F-04110 Cereste (FR)
(74) Mandataire: Mongrédien, André

(56) Documents cités:
- EP-A- 0 028 142
- EP-A- 0 078 675
- FR-A- 2 010 237
- FR-A- 2 137 070
- US-A- 3 295 087
- US-A- 3 514 735
- US-A- 3 546 689
- US-A- 4 365 229
- US-A- 4 638 107

## Description

L'invention se rapporte à une paroi détectrice d'un point chaud ainsi qu'à son procédé d'obtention.

Il est souvent important de pouvoir contrôler l'apparition de points chauds sur la paroi d'une enceinte de protection, par exemple produits par des projections de matière quand le volume enclos contient des corps en réaction chimique exothermique.

On garnissait jusqu'à présent la paroi de l'enceinte d'un grand nombre de sondes de détection en forme de câbles telles que celles qui sont décrites dans le brevet français n°2 137 070, ce qui était compliqué et coûteux et impliquait un nombre de mesures important.

Le brevet EP-A-0 028 142 décrit un capteur d'échauffement localisé conforme à cette conception, où le câble comprend un fil métallique entouré par une couche de vernis, une couche de polymère à résistivité variable selon la température et une gaine protectrice. Des mesures de la capacité du câble sont entreprises.

L'invention consiste par contre à homogénéiser la paroi en la rendant tout entière sensible aux points chauds sans se soucier de leur localisation. La paroi de l'enceinte comprend successivement, recouvrant la paroi de base si elle est une première couche conductrice de l'électricité, une sous-couche d'accrochage, une couche adhérente d'un matériau ayant une résistivité fortement variable avec la température, une seconde couche adhérente conductrice de l'électricité à un potentiel électrique différent du potentiel de la paroi de base constituée par la première couche conductrice de l'électricité et une couche adhérente de protection. De plus, la sous-couche d'accrochage est en alliage de cobalt, cuivre, aluminium et yttrium.

Si la paroi de base n'est pas conductrice de l'électricité, on peut déposer au préalable une première couche conductrice.

Le matériau ayant une résistivité fortement variable avec la température est de préférence un matériau réfractaire tel que la zircone éventuellement enrichie à l'oxyde d'yttrium. La couche de protection peut être constituée du même matériau.

Un procédé de fabrication approprié de telles parois consiste à projeter successivement les couches adhérentes sur la paroi de base.

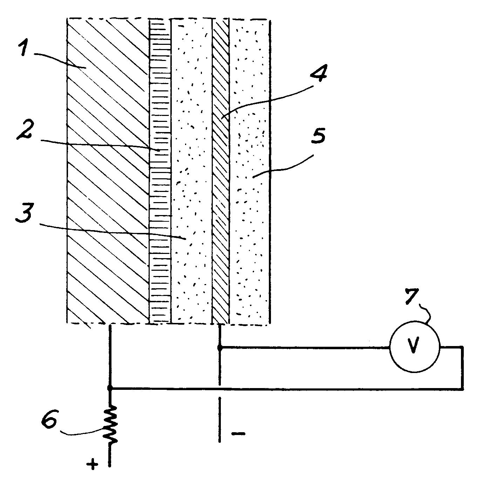

On va maintenant décrire plus en détail l'invention à l'aide de la figure suivante:
- la figure est une réalisation possible de l'invention où l'on détaille en outre le circuit électrique de mesure.

Sur la figure, la paroi de base 1 est en acier, et elle porte successivement une sous-couche adhérente 2 de Cocraly (alliage de cobalt, cuivre, aluminium et yttrium) de 0,1 mm d'épaisseur, une couche intermédiaire de zircone (ZrO₂)3 enrichie à l'oxyde d'yttrium (Y₂O₃) à 10% environ en concentration moiaire, une couche adhérente conductrice de nickel 4 de 0,3 mm d'épaisseur et une couche adhérente de protection 5 en zircone enrichie à l'oxyde d'yttrium de 0,5 mm d'épaisseur.

La sous-couche 2 a pour utilité de contribuer à l'accrochage de la couche intermédiaire 3 sur la paroi de base 1.

La zircone a des propriétés à la fois réfractaires qui justifient son emploi pour la couche de protection 5 orientée vers la source chaude et exposée aux projections de la matière fondue et des propriétés que l'on pourrait appeler thermoconductrices qui justifient son emploi pour la couche intermédiaire 3 : entre 50^{o}C et 350^{o}C sa résistivité est divisée par environ 500.

La paroi de base 1 est reliée à une borne positive par l'intermédiaire d'une résistance 6. La couche conductrice 4 est reliée à une borne négative et prend donc toujours un potentiel différent de la paroi de base 1. Un voltmètre 7 a par ailleurs ses bornes reliées à la paroi de base 1 et à la couche conductrice 4 respectivement.

Quand un point chaud se forme par l'arrivée d'une gouttelette à haute température sur la couche de protection 5, un échauffement localisé se produit et la résistance de la couche intermédiaire 3 chute à cet endroit, ce qui est immédiatement repéré grâce au voltmètre 7 dont la déviation de l'aiguille donne une idée de la température atteinte.

La paroi peut être réalisée par dépôts successifs des différentes couches 2 à 5 sur la paroi de base 1 par projection de plasma.

Les essais ont montré la sensibilité de telles parois aux échauffements localisés ainsi que leur tenue mécanique, notamment grâce à la couche de protection 5 : même si la couche de nickel 4 fond localement, les couches réfractaires 3 et 5 retiennent la zone fondue qui se resolidifie ensuite sur place. Il n'y a donc pas de destruction de la paroi.

## Revendications

1. Paroi détectrice d'un point chaud pour une enceinte de protection, comprenant successivement une première couche (1) conductrice de l'électricité constituant une paroi de base, une sous-couche d'accrochage (2) en alliage de cobalt , cuivre, aluminium et yttrium, une couche adhérente (3) d'un matériau ayant une résistivité fortement variable avec la température, une seconde couche adhérente conductrice (4) de l'électricité à un potentiel électrique différent du potentiel de la paroi de base, et une couche adhérente de protection (5).

2. Paroi détectrice d'un point chaud suivant la revendication 1, caractérisée en ce que la couche de protection (5) est constituée du matériau ayant une résistivité fortement variable.

3. Paroi détectrice d'un point chaud suivant l'une quelconque des revendications 1 ou 2, caractérisée en ce que le matériau à résistivité fortement variable est réfractaire.

4. Paroi détectrice d'un point chaud suivant la revendication 3, caractérisée en ce que le matériau réfractaire est à base de zircone.

5. Paroi détectrice d'un point chaud suivant la revendication 4, caractérisée en ce que le matériau réfractaire est constitué de zircone enrichie en oxyde d'yttrium.

6. Procédé de fabrication d'une paroi détectrice d'un point chaud suivant l'une quelconque des revendications 1 à 5, caractérisé en ce que la sous-couche d'accrochage (2), la couche adhérente (3) de matériau à résistivité fortement variable, la seconde couche adhérente conductrice (4) et la couche adhérente de protection sont successivement déposées sur la paroi de base par projection.

## Claims

1. Wall for detecting a hot point for a protective enclosure, successively having a first electricity conducting layer (1) constituting a base wall, an attachment underlayer (2) of an alloy of cobalt, copper, aluminium and yttrium, an adhesive layer (3) of a material having a resistivity which is highly variable with the temperature, a second adhesive, electricity conducting layer (4) at a potential different from the potential of the base wall, and an adhesive protective layer (5).

2. Wall detecting a hot point according to claim 1, characterized in that the protective layer (5) is made from the material having a highly variable resistivity.

3. Wall for detecting a hot point according to either of the claims 1 and 2, characterized in that the material having a highly variable resistivity is refractory.

4. Wall for detecting a hot point according to claim 3, characterized in that the refractory material is based on zirconia.

5. Wall for detecting a hot point according to claim 4, characterized in that the refractory material is constituted by yttrium oxide-enriched zirconia.

6. Process for the production of a wall detecting a hot point according to any one of the claims 1 to 5, characterized in that the attachment underlayer (2), the adhesive layer (3) of material with a highly variable resistivity, the second adhesive conductive layer (4) and the adhesive protective layer are successively deposited on the base wall by spraying.

## Patentansprüche

1. Wand zum Detektieren einer warmen Stelle, für einen Schutzbehälter, nacheinander enthaltend eine erste, elektrisch leitende Schicht (1), die eine Basiswand bildet, eine Befestigungs-Unterschicht (2) aus einer Legierung aus Kobalt, Kupfer, Aluminium und Yttrium, eine Haftschicht (3) aus einem Material mit einer sehr von der Temperatur abhängigen Resistivität, einer zweiten Haftschicht (4), elektrisch leitend für ein anderes elektrisches Potential als das Potential der Basiswand, und eine haftende Schutzschicht (5).

2. Wand zum Detektieren einer warmen stelle nach Anspruch 1, dadurch gekennzeichnet, daß die Schutzschicht (5) gebildet wird aus einem Material mit einer sehr variablen Resitivität.

3. Wand zum Detektieren einer warmen stelle nach einem der Ansprüche 1 oder 2, dadurch gekennzeichnet, daß das Material mit der sehr variablen Resistivität hitzebeständig ist.

4. Wand zum Detektieren einer warmen Stelle nach Anspruch 3, dadurch gekennzeichnet, daß das hitzebeständige Material ein Material auf Zirkonbasis ist.

5. Wand zum Detektieren einer warmen Stelle nach Anspruch 4, dadurch gekennzeichnet, daß das hitzebeständige Material gebildet wird aus mit Yttriumoxid angereichertem Zirkon.

6. Herstellungsverfahren einer Wand zum Detektieren einer warmen Stelle nach einem der Ansprüche 1 bis 5, dadurch gekennzeichnet, daß die Befestigungs-Unterschicht (2), die Haftschicht (3) aus Material mit sehr variabler Resistivität, die zweite, leitende Haftschicht (4) und die haftende Schutzschicht nacheinander durch Spritzen auf der Basiswand angebracht werden.
